# EUROPEAN PATENT SPECIFICATION

(11) **EP 3 181 924 B1**
(45) Date of publication and mention of the grant of the patent: **22.01.2020**
(21) Application number: 15201039.3
(22) Date of filing: 18.12.2015
(51) Int. Cl.: F16C 1/18, F16C 1/20, F16H 19/04, B60J 7/057, F16G 1/28

(54) **DRIVE CABLE AND DRIVE UNIT FOR VEHICLE MEMBER**
ANTRIEBSKABEL UND ANTRIEBSEINHEIT FÜR EIN FAHRZEUGELEMENT
CÂBLE ET UNITÉ D'ENTRAÎNEMENT POUR ÉLÉMENT DE VÉHICULE

(43) Date of publication of application: 21.06.2017
(73) Proprietor: Webasto SE, 82131 Stockdorf (DE)
(72) Inventor: Schreiber, Ulrich, 82131 Stockdorf (DE); Dhulst, Chris, 8720 Oeselgem (BE); Bert, Katrien, 9160 Eksaarde (BE)
(74) Representative: advotec.

(56) References cited:
- EP-A1- 0 499 135
- EP-A2- 1 004 796
- DE-A1-102012 105 372
- DE-B- 1 003 517
- US-A- 2 770 977

## Description

The invention relates to a drive cable for actuating a vehicle member being movable as against a vehicle structure as well as to a drive unit comprising a driving toothed wheel and at least one drive cable of this kind.

Drive cables for actuating a vehicle member being movable as against a vehicle structure are known from practice and serve to actuate, for example, a lid member of a retractable roof arrangement, with the aid of which a roof opening of the relevant vehicle may selectively be closed or at the very least partially be cleared. The drive cables transmit a drive force from a drive motor onto the movable vehicle member and may be formed from a flexible plastic body, which is joined to the vehicle member and includes a denticulation, which engages with a driving toothed wheel of the drive motor or a gearing. In order to give the needed stability to the plastic drive cable, a reinforcement extending in the axial direction may reach through the cable body, at which the denticulation is realised.

Document EP 1 004 796 A2 discloses an angular toothed belt incorporating a denticulation for engagement with and a wheel. Cords or tissues having an axial orientation are inserted in the toothed belt for increasing tensile strength. The denticulation is limited in a transverse direction of the toothed belt, on each of its two sides, by flanks, which are in contact with the wheel, so that the toothed belt is guided.

The known plastic drive cables present the problem that either a satisfactory noise behaviour cannot be obtained in operation since the denticulation slides at a guide face, which in turn leads to rattling, or the flexibility in the transverse direction of the cable does not meet the requirements existing in conjunction with a retractable roof.

Moreover, it is known from practice to employ compression-proof drive cables for driving lid members of a retractable roof arrangement, which cables are termed gradient cables and include a gradient helix at their periphery, which helix engages with a driving toothed wheel of the relevant drive motor. In addition, a flock coating is realised at the periphery. In the context of such drive cables, it may, however, happen that cables are skipped in the region of the drive pinion, which is in turn connected to an undesired noise behaviour and to high wear. Since the periphery of a gradient cable is not realised in a homogeneous fashion and is also provided with the flock coating, a guiding in corresponding guide tubes is not possible without any noise that might be troublesome being generated.

It is the object of the invention to create a drive cable having a plastic cable body, which cable meets high requirements regarding the noise behaviour, as well as a drive unit having such a drive cable.

In accordance with the invention, this object is attained by the drive cable having the features of claim 1 and by the drive unit having the features of claim 14.

Consequently, the essence of the invention is that the cable body is realised such that the denticulation, with its tips of teeth, is arranged in a guide tube or the like, at the very least largely without being in contact, by reason of the pocket flanks, so that the risk of rattling, that means an undesired noise behaviour, is reduced. The tips of teeth, which may be considered to be fins or ribs, are thus set back as against a virtually circumferential peripheral face of the cable body in the direction of the cable axis. By way of the continuous armouring/reinforcement which is arranged beneath the recesses, that means in the root of a tooth of the denticulation, and which consists of at least two uninterrupted armouring harnesses/strands and/or of at least one uninterrupted armouring harness/strand having a flat cross-section, it is guaranteed that the drive cable gets neatly justified in its guide, to be more precise with a pretension preventing a rattling. A root of a tooth is a region of the cable body between two tips of teeth.

The drive cable according to the invention is a polymer cable, which may, without any flock coating, have established a contact with little friction to a guide member, such as a guide tube. By way of the flexibility, which is made available by the plastic cable body, the best possible engaging behaviour may in addition be established at a driving toothed wheel since a plurality of teeth may simultaneously engage the denticulation of the cable body. The denticulation running along the axial peripheral line defines, in a clear manner, the position of the drive cable as against the driving toothed wheel. As a matter of course, the drive cable has to be prevented from being distorted about its longitudinal axis in the region of engaging in order to guarantee a proper operation of the resulting drive system. The cable body of the drive cable is an extruded polymer member, which follows a circular or also an oval cross-section. The top front faces of teeth of the denticulation, in relation to a peripheral face being defined by the cable body in the region without any denticulation and virtually being continued in the denticulation region, are set back in the direction of the cable body axis, such that the denticulation is completely within the guide face being formed by the cable body periphery.

The basic radius of the cable body is thus larger than the maximum radius of the front faces of the teeth in relation to a geometric central axis of the cable body and is for example between 3 mm and 8 mm. Thus, a contact between a cable guide and the denticulation can be prevented, which in turn benefits the noise behaviour upon actuation of the drive cable.

The armouring harnesses may in each instance be formed from a wire, from a wire mesh, from glass fibres, carbon fibres and/or the like. Preferably, a steel wire or a steel wire mesh is employed.

If the drive cable according to the invention includes at least two armouring harnesses, the same, in an expedient embodiment, in particular have a round cross-section, but may have also a non-round cross-section.

In the embodiment having at least one armouring harness having a flat cross-section, a long cross-section axis of the armouring harness is preferably oriented in the transverse direction of the cable and a short cross-section axis, which is at a right angle to the long cross-section axis, is oriented in the vertical direction of the cable. This armouring band is, for example, formed from a metal band.

By way of the armouring that is realised in accordance with the invention, it can be achieved that the drive cable, parallel to the armouring plane, has a higher flexural stiffness compared to the flexural stiffness at a right angle to the armouring plane. Thereby, the correct orientation of the drive cable with respect to a drive pinion can be maintained under most operating conditions.

In the armouring plane, the armouring harnesses can be in contact to each other or have a certain distance to each other within the limits of the diameter of the cable body, in each case depending on the diameter of the armouring harnesses and the diameter of the cable body, wherein the diameter of the armouring harnesses is 0.5 times the diameter of the cable body at the most.

In order to guarantee that the relevant driving toothed wheel does not make an imprint in the armouring harnesses, the armouring harnesses preferably have a certain distance from the recesses.

The flexural stiffness of the cable is defined by the sum of the individual stiffnesses of the cable body and the armouring harnesses.

As a matter of course, the peel strength or racking strength between the polymer of the cable body and the armouring harnesses is configured such that retracting the cable body out from the armouring harness is not possible during operation.

If the armouring harnesses are in each instance formed from a wire mesh, said harnesses may have the same or opposite directions of lay.

The denticulation, in the context of the drive cable according to the invention, runs along an axial peripheral line of the cable body. The regions of the peripheral face without any denticulation, which form a continuous and homogeneous profiled face without any cracks in the longitudinal direction of the cable, may be used for guiding. In principle, the cable body does not present any flock coating.

In order to achieve a preferred direction of flexure of the drive cable according to the invention, a material weakening, in the form of a groove or of an axial recess, may be introduced at the periphery of the cable body along a defined line.

An eccentric or off-centre arrangement of the armouring plane at a distance to a longitudinal centre plane of the cable body or the axial recess may bring about an additional torsion of the drive cable within a cable guide, such that the cable is arranged in the cable guide with a certain pretension, which can in turn prevent an undesired rattling. In addition, by way of the correspondingly advantageous arrangement of the armouring plane or of the recess, it may be achieved that the drive cable gets automatically justified in the correct manner at the driving toothed wheel, without special guide faces being needed hereunto at the drive cable since the cable always gets justified in the direction of the smallest geometrical moment of inertia.

The distance between the armouring plane and the longitudinal centre plane of the cable body being arranged so as to be parallel thereto preferably amounts to 0.1 times the diameter of the cable body at most.

In order to ensure that the fins of the drive cable being formed by the denticulation are guided in corresponding guides of a drive system without being in contact, each of the recesses, in relation to the peripheral direction of the cable body, has an opening cross-section, which occupies less than 180° of the periphery of the cable body. This means that the guide section of the drive cable is formed by a face of the drive cable, which section faces away from the recesses and which extends, in the peripheral direction of the cable body, over a region of more than 180°, to be more precise without any interruption in the longitudinal direction of the cable.

Each of the pocket flanks has a lateral pocket edge. A guide section of the cable body hence extends between the two lateral pocket edges of a recess.

The guide section of the cable body, in a special embodiment of the drive cable according to the invention, includes at least three guide faces which are spaced apart from one another in the peripheral direction, and which are realised so as to be curved in the peripheral direction. Planar faces or also recesses of the cable body may be arranged between the guide faces.

In order to achieve the best possible guide behaviour of the drive cable in a cable guide, the guide faces or axial centre lines of the guide faces, in the peripheral direction, are in each instance offset one with respect to the other by approximately 120°.

In order to exactly define the position of the cable body or its rotational position in the assembled position, the cable body may additionally include an axial recess at its periphery, a guide fin of the cable guide engaging said recess. In particular, the recess may also be formed by a bevel of the cable body, which rests against a corresponding support face of the cable guide. A fin may also be realised at the periphery of the cable body, which engages a groove of the cable guide.

Moreover, subject-matter of the invention is a drive unit for a vehicle member being movable as against a vehicle structure, comprising a driving toothed wheel and at least one drive cable in accordance with the aforedescribed kind.

In order to prevent a skipping of teeth in the engaging region between the drive cable and the driving toothed wheel, said two members, in a preferred embodiment of the drive unit according to the invention, engage with each other via a contact line following a circular line. Hence, it is always guaranteed that multiple teeth of the driving toothed wheel engage the denticulation of the drive cable.

In a special embodiment of the drive unit according to the invention, the contact line extends over at least 30° in relation to the periphery of the driving toothed wheel. It is also conceivable that the contact line extends over 180° and more.

In a further special embodiment of the drive unit according to the invention, the driving toothed wheel engages with two drive cables of the above-described kind, wherein the two drive cables, in the direction of the axis of the driving toothed wheel, are offset one with respect to the other. The driving toothed wheel then preferably includes two denticulations being spaced apart from each other in the axial direction, each of which is assigned to one of the two drive cables. In particular in the context of drive cables, which engage with the driving toothed wheel in different planes, a wrap angle of at least approximately 180° may be realised. The driving toothed wheel preferably has a diameter that corresponds to at least 6 times the diameter of the drive cable.

Further advantages and advantageous configurations of the subject-matter of the invention can be taken from the description, from the drawing and from the claims.

Exemplary embodiments of a drive unit according to the invention and of drive cables according to the invention are illustrated in a schematically simplified way in the drawing and will be explained in more detail in the following description.

In the figures:
- Figure 1: shows a schematic view from above onto a vehicle roof having a drive unit for a movable lid member;
- Figure 2: shows a perspective illustration of a driving toothed wheel and of two drive cables of the drive unit;
- Figure 3: shows an enlarged view of one of the drive cables engaging with the driving toothed wheel;
- Figure 4: shows the drive cable on its own in the bent state;
- Figure 5: shows a further perspective view of the drive cable in the elongated state;
- Figure 6: shows a section through the drive cable according to Figure 5 along line VI-VI in Figure 5;
- Figure 7: shows a section through the drive cable according to Figure 5 along the longitudinal centre plane thereof;
- Figure 8: shows a perspective view of an alternative embodiment of a drive cable according to the invention;
- Figure 9: shows a section through the drive cable according to Figure 8 along line IX-IX in Figure 8;
- Figure 10: shows a section through the drive cable according to Figure 8 along the longitudinal centre plane thereof;
- Figure 11: shows a perspective view of a further embodiment of a drive cable according to the invention;
- Figure 12: shows a section through the drive cable according to Figure 11 along line XII-XII in Figure 11;
- Figure 13: shows a section through the drive cable according to Figure 11 along the longitudinal centre plane thereof;
- Figure 14: shows a perspective view of a further embodiment of a drive cable according to the invention;
- Figure 15: shows a section through the drive cable according to Figure 14 along line XV-XV in Figure 14; and
- Figure 16: shows a longitudinal section through the drive cable according to Figure 14 along the longitudinal centre plane thereof.

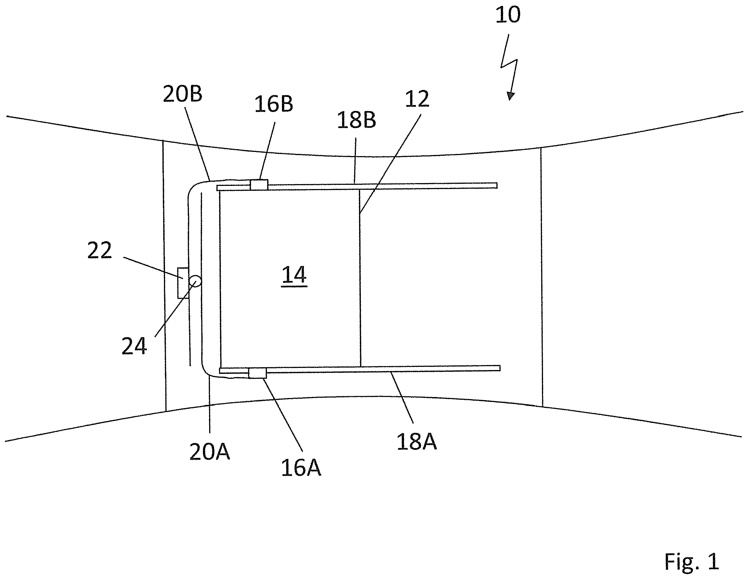

In Figure 1, a vehicle roof 10 is shown which appertains to a passenger car not being illustrated otherwise, and which includes a roof opening 12, which may selectively be closed or at the very least partially be cleared with the aid of a lid member 14. The lid member 14 thus constitutes a vehicle member that is movable as against the vehicle structure.

In order to be able to displace the lid member 14, it is connected to displacing kinematics, which, in relation to a vertical longitudinal centre plane of the roof on each of their two sides, include a drive slide 16A or 16B, which is guided in a respective guide rail 18A or 18B extending in the longitudinal direction of the roof.

A drive cable 20A or 20B that is rigid in compression is in each instance joined to the drive slides 16A and 16B. The drive cables 20A and 20B are guided to a common drive motor 22 via corresponding guide tubes and engage with a common driving toothed wheel 24 of said drive motor. The drive motor 22, with its driving toothed wheel 24, and the drive cables 20A and 20B form a drive unit for the lid member 14.

The driving toothed wheel 24, in relation to its axis of rotation, has two denticulations being axially offset with respect to each other, one of said denticulations engaging with drive cable 20A and the other one engaging with drive cable 20B. Drive cables 20A and 20B in each instance wrap the driving toothed wheel 24 in the peripheral direction in a region of approximately 180°. Hence, a secure engagement of the driving toothed wheel 24 is guaranteed.

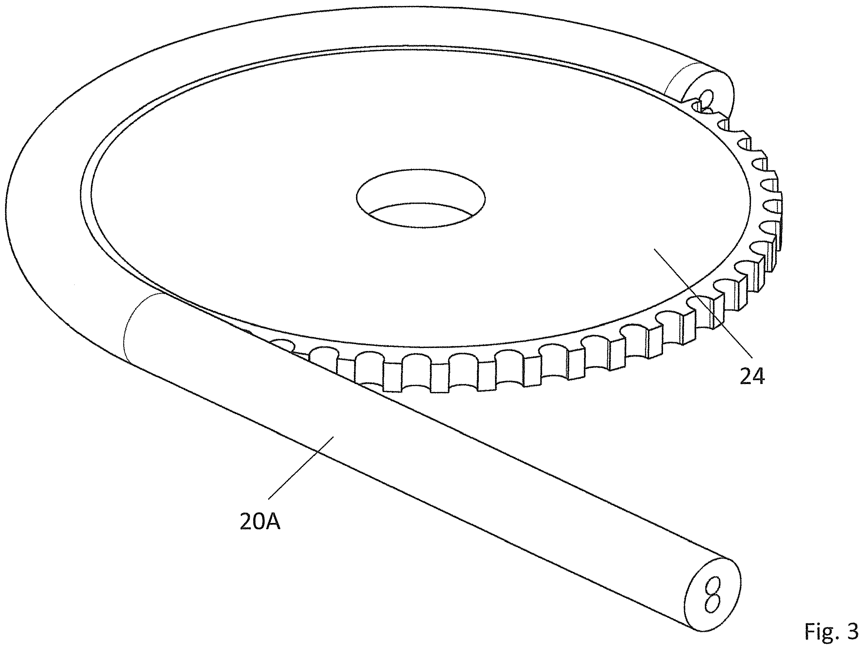

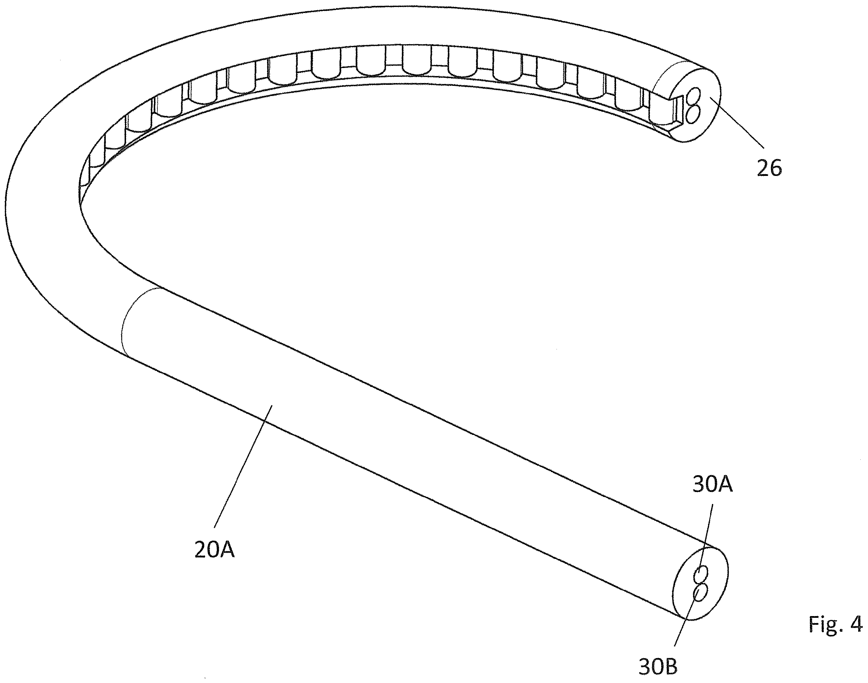

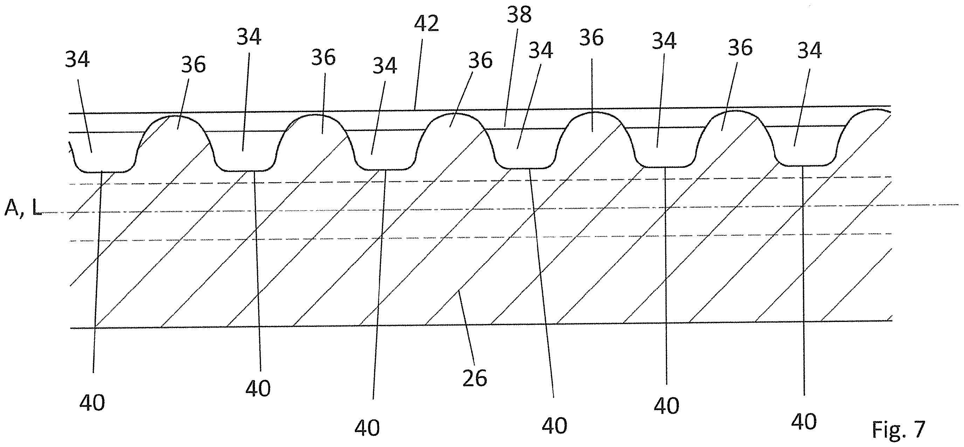

Drive cables 20A and 20B are configured so as to be identical and are described in the following using Figures 3 to 7.

Drive cables 20A and 20B are in each instance configured as plastic drive cables and comprise a cable body 26 being made of plastics, whose periphery constitutes a cylinder face being interrupted in the peripheral direction. The cable body 26 thus has a peripheral face extending over an angle of approximately 270° to 300° in the peripheral direction and forming a guide section 25 of the cable body 26, which section 25 is interrupted by a denticulation 28.

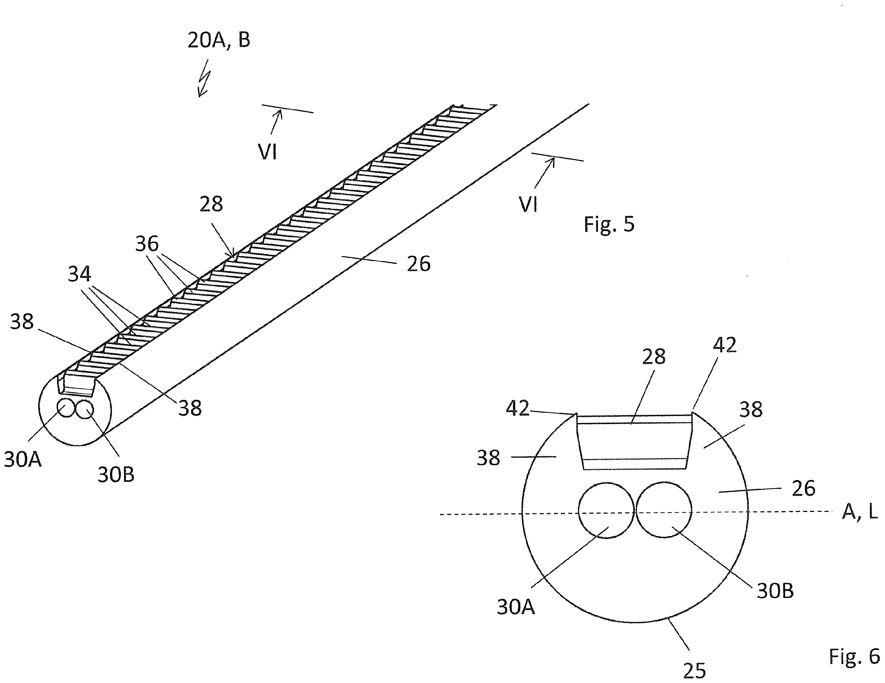

As it can in particular be taken from Figures 5 and 6, two armouring harnesses/ strands 30A and 30B forming a reinforcement reach through the cable body 26, which harnesses are in each instance formed from a steel wire mesh without any recesses and define an armouring plane A, which extends in the transverse direction of the cable and in the longitudinal direction of the cable. The armouring harnesses 30A and 30B are arranged side by side in the armouring plane A.

The armouring plane A is approximately in a longitudinal centre plane L of the drive cable and extending transversely to the denticulation 28, in relation to the cylinder face being formed by the cable body 26.

The denticulation 28 is engraved into the cable body 26 and formed by pocket-like recesses 34 which are spaced apart in the longitudinal direction of the cable body 26 at regular intervals, and which are limited by flanks of resulting tips of teeth 36 in the longitudinal direction of the cable in each instance, and by a pocket flank 38 being formed by the cable body 26 in the transverse direction of the cable on each of their two sides. With their bottom, the recesses 34 in each instance limit a root of a tooth 40, the armouring harnesses 30A and 30B reaching through or under the same.

Each of the pocket flanks 38 has an edge 42, the top front faces of teeth 36 being set back as against said edge in the direction of the armouring plane A. A small step is thus realised between the front faces of the tips of teeth 36 and the periphery of the cable body 26. By way of the pocket flanks 38 and the front faces of teeth 36 being lower as against the pocket flanks 38, the front faces of teeth 36 can be prevented from being in contact with guides of the respective drive cable 20A or 20B, such that rattling that might occur thereby can be prevented.

The aforementioned reinforcement strands 30A and 30B made from steel wire mesh generate a strong preferential bending direction along a primary bending axis. This bending direction can be used to ensure the correct orientation of the drive cable 20A during assembly and provide a reliable operation of the drive system, as the denticulation or indentation 28 faces the drive pinion teeth. Therefore, misalignment between the drive cables 20A and 20B and the drive pinion 24 can be avoided, as the preferential bending direction of the drive cables 20A and 20B is identical with the gear teeth of the drive pinion 24. This orientation is also stable for different load conditions.

Further, the aforementioned design of the drive cables 20A and 20B creates pretension in the guides of the cables to avoid rattling. A load change noise can also be avoided or reduced.

Uniform and robust behaviour of the drive cables 20A and 20B can be achieved under all operation conditions. By the reinforcement strands 30A and 30B, a high tensile strength of the drive cables 20A and 20B can be achieved without limiting the indentation depth. Rather, a deep indentation for a given tensile strength can be realised.

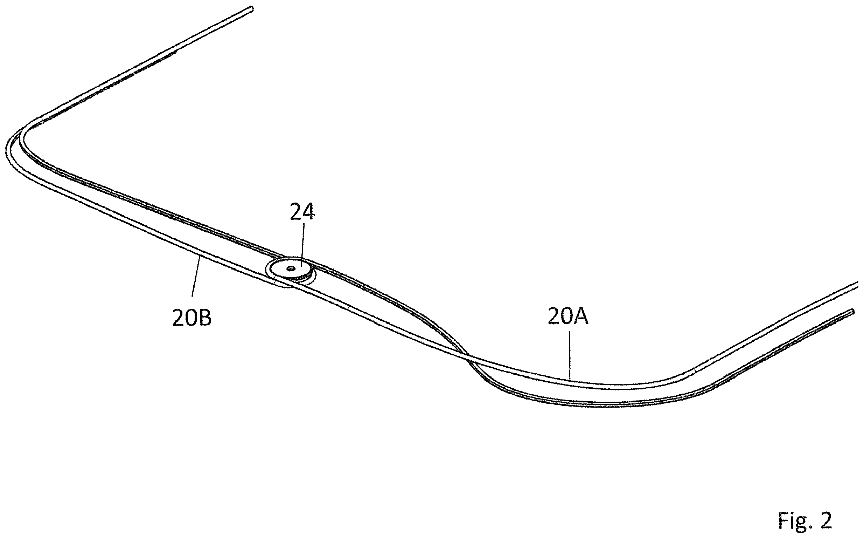

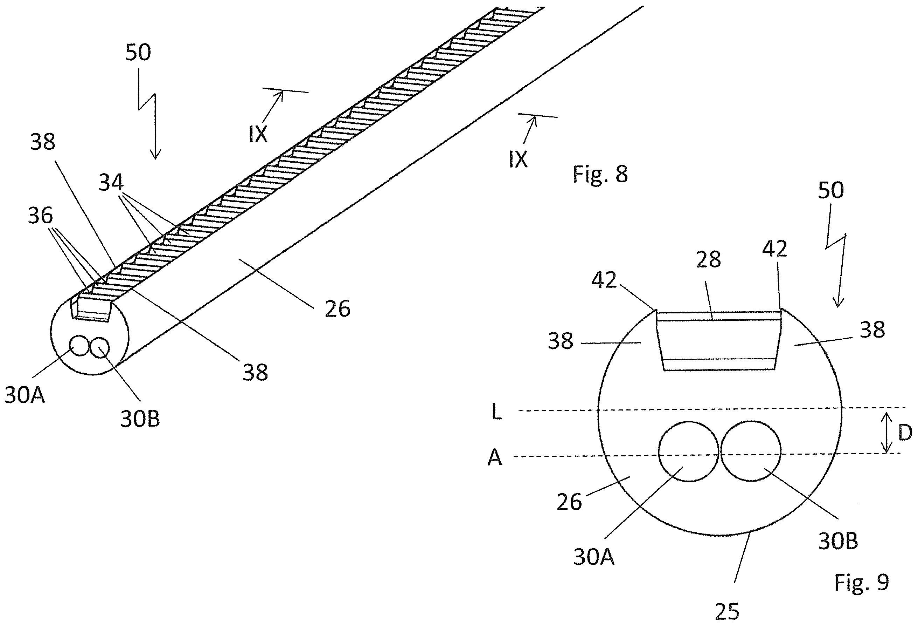

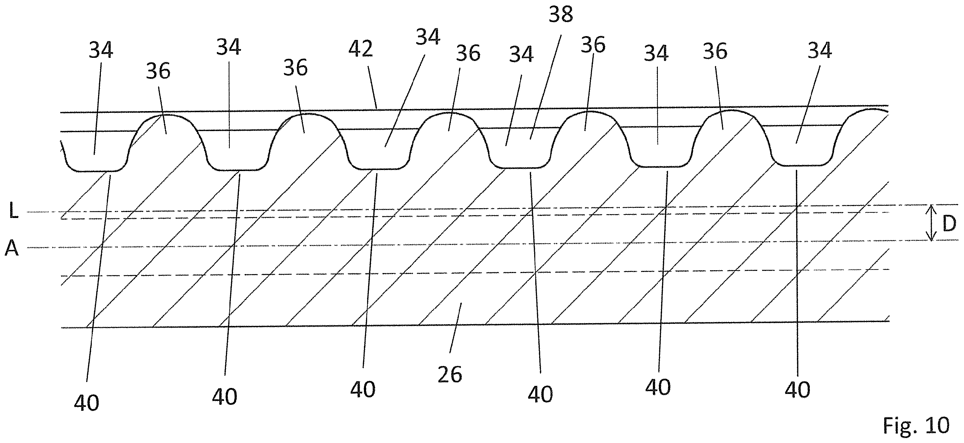

In Figures 8 to 10, an alternative embodiment of a drive cable 50 is illustrated, which largely corresponds to the drive cable being illustrated in Figures 2 to 7, but differs from the same in that it includes an armouring likewise being formed from two armouring harnesses 30A and 30B, however, being in an armouring plane A, which has a distance D from a longitudinal centre plane L of the drive cable 50. The armouring harnesses 30A and 30B, which run next to each other side by side in the longitudinal direction of the cable in the armouring plane A, are thus arranged on the other side of the longitudinal centre plane L of the cable than a denticulation 28 of the drive cable 50. By way of the off-centre arrangement of the armouring plane A, it is possible to enlarge the imprint depth of the driving toothed wheel 24 into the cable 50 or to realise the recesses 34, forming the denticulation 28 deeper than with the drive cable according to Figures 2 to 7.

This has no limiting effect on the bending properties of the drive cable, as the effect on the flexural behaviour of multiple reinforcement strands can exceed the effect of eccentric reinforcement strand position.

The desired cable properties can largely be varied and be controlled more easily compared to a single core wire, e. g. favourable bending direction and rotational properties, pretension in guides, tensile strength etc.

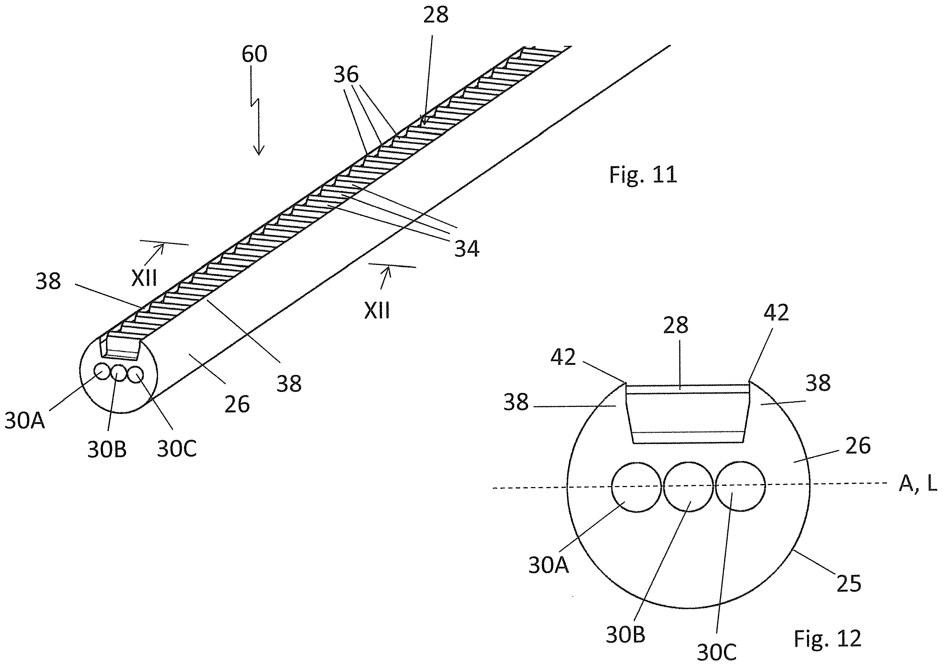

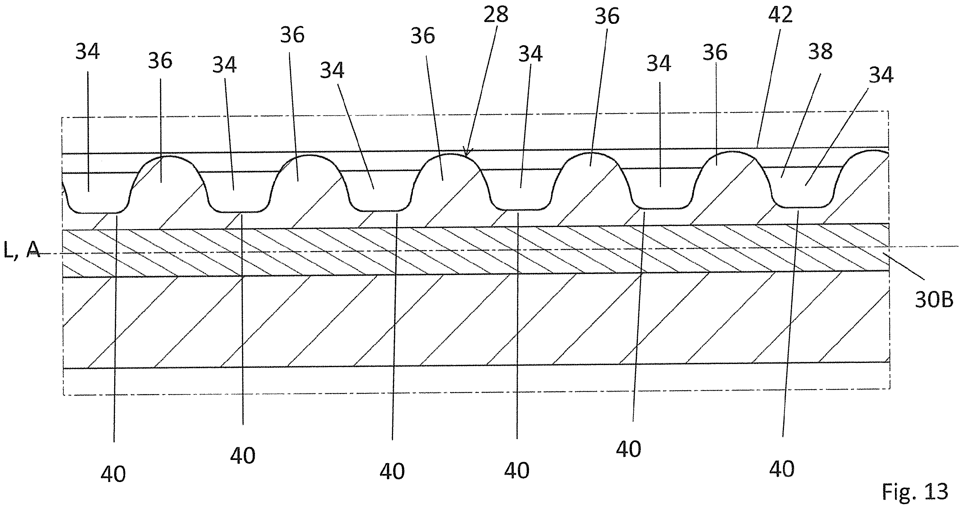

In Figures 11 to 13, a further embodiment of a drive cable 60 is illustrated, which largely corresponds to the embodiment according to Figures 2 to 7, but differs from the same in that three armouring harnesses 30A, 30B and 30C are arranged in an armouring plane A, which approximately coincides with a longitudinal centre plane L of the drive cable 60, said armouring harnesses being formed from a steel wire mesh in each instance and reaching through the cable body 26 being formed from plastics or from a polymer in the axial direction, in this process also reaching through or under the roots of the teeth 40 of the denticulation 28.

Apart from that, drive cable 60 corresponds to the embodiment according to Figures 2 to 7.

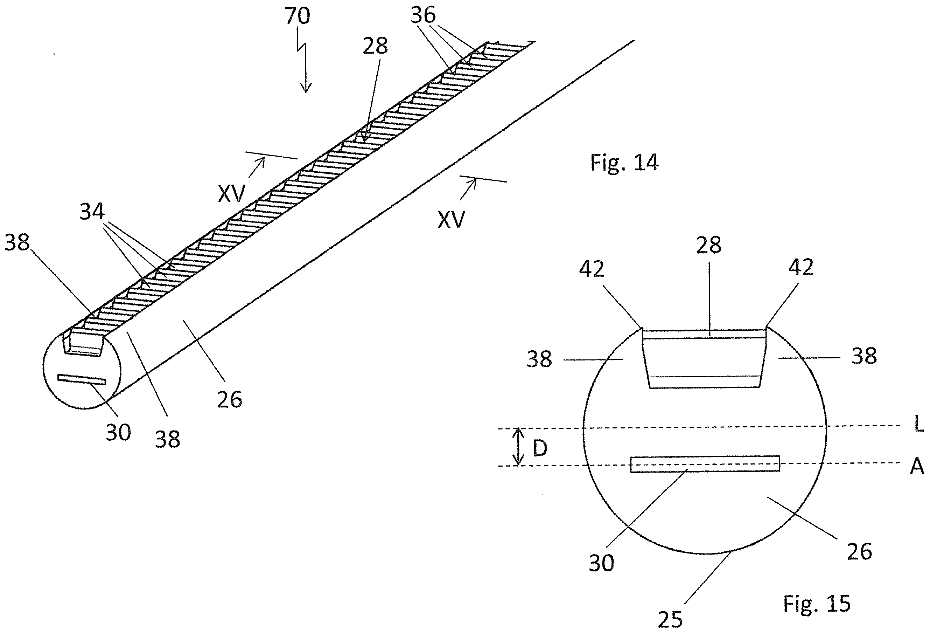

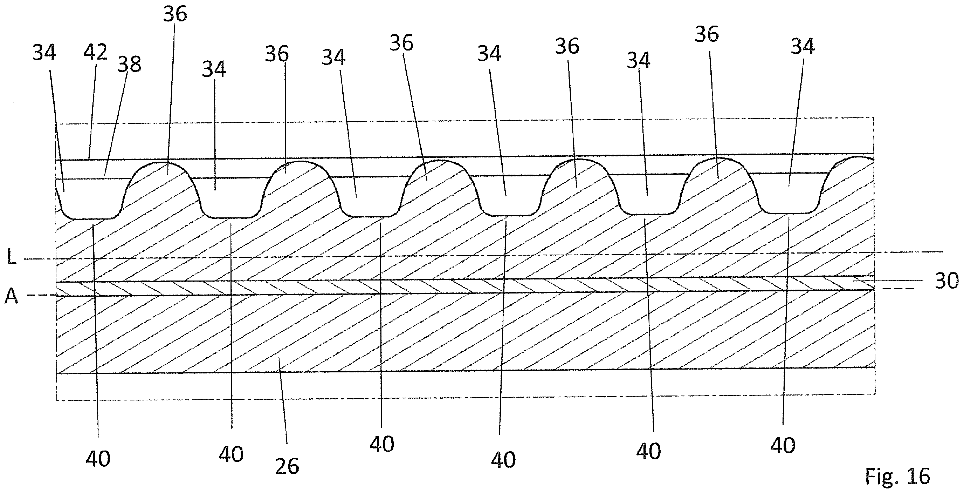

In Figures 14 to 16, a further embodiment of a drive cable 70 is illustrated, which likewise largely corresponds to the embodiment according to Figures 2 to 7, but differs from the same in that it includes an armouring harness 30, which is formed by a metal band being made of a steel wire mesh and whose plane is in an armouring plane A, which is arranged so as to be parallel to a longitudinal centre plane L of drive cable 70. The armouring plane A defined by the armouring harness 30 having an almost rectangular cross-section is arranged so as to be spaced apart from the longitudinal centre plane L, to be more precise on the side facing away from a denticulation 28.

Apart from that, drive cable 70 corresponds to the embodiment according to Figures 2 to 7.

### List of reference numerals

- 10: vehicle roof
- 12: roof opening
- 14: lid member
- 16A, B: drive slide
- 18A, B: guide rail
- 20A, B: drive cable
- 22: drive motor
- 24: driving toothed wheel
- 25: guide section
- 26: cable body
- 28: denticulation
- 30, A, B, C: armouring harness
- 34: recess
- 36: tip of a tooth
- 38: pocket flank
- 40: root of a tooth
- 42: edge
- 50: drive cable
- 60: drive cable
- 70: drive cable

## Claims

1. A drive cable for actuating a vehicle member (10) being movable as against a vehicle structure, comprising a cable body (26) which is made of plastics, and which includes a denticulation (28) extending in the axial direction for engaging with a driving toothed wheel (24) and through which an armouring extending in the axial direction reaches, wherein the denticulation (28) is formed by pocket-like recesses (34) which are spaced apart in the axial direction at regular intervals, and which are limited, in the longitudinal direction of the cable, by flanks of resulting tips of teeth (36) formed by the cable body (26) and in the transverse direction of the cable, on each of their two sides, by a pocket flank (38) and which are in each instance limited by a root of a tooth (40) on the bottom side, the armouring reaching through said cable body (26) beneath said recesses (34) and said tips of teeth (36), the armouring defining an armouring plane (A) which extends in the transverse direction of the cable and in the longitudinal direction of the cable, and in which at least two continuous armouring harnesses (30A, 30B, 30C) extending in the axial direction are arranged side by side and/or in which at least one armouring harness (30) having a flat cross-section is arranged, **characterised in that** the cable body (26) is an extruded polymer element, which follows a circular or oval cross-section and top front faces of teeth (36) of the denticulation (28) are, in relation to a peripheral face being defined by the cable body (26) in the region without any denticulation and being virtually continued in the denticulation region, set back in the direction of the cable body axis, such that the denticulation (28) is completely within the peripheral face being defined by the cable body (26).

2. The drive cable according to claim 1, **characterised in that** each of the at least two armouring harnesses (30A, 30B, 30C) has a round cross-section.

3. The drive cable according to claim 1, **characterised in that** the at least one armouring harness (30) having the flat cross-section has a long cross-section axis, which extends in the transverse direction of the cable, and a short cross-section axis, which extends in the vertical direction of the cable.

4. The drive cable according to claim 3, **characterised in that** the armouring harness (30) is formed from a metal band.

5. The drive cable according to any one of the claims 1 to 4, **characterised in that** the at least one armouring harness (30A, 30B, 30C) is formed from a wire, from a wire mesh, from carbon fibres and/or glass fibres.

6. The drive cable according to any one of the claims 1 to 5, **characterised in that** the armouring plane (A) is arranged so as to be parallel to and spaced apart from a longitudinal centre plane (L) of the cable body (26).

7. The drive cable according to any one of the claims 1 to 6, **characterised in that** each of the recesses (34), in relation to the peripheral direction of the cable body (26), has an opening cross-section, which extends over less than 180° in the peripheral direction of the cable body (26).

8. The drive cable according to any one of the claims 1 to 7, **characterised in that** the recesses (34), in the transverse direction of the cable, have a lateral pocket edge (42) on each of their two sides and **in that** a guide section of the cable body (26) extends between the two lateral pocket edges (42) of a recess (34).

9. The drive cable according to claim 8, **characterised in that** the guide section includes at least three guide faces being spaced apart from one another in the peripheral direction.

10. The drive cable according to claim 9, **characterised in that** the guide faces include axial centre lines, which are in each instance offset one with respect to the other in the peripheral direction by approximately 120°.

11. The drive cable according to any one of the claims 1 to 10, **characterised in that** the cable body (26), in the region of the tips of teeth (36), has a cross-section that is at the very least nearly circular.

12. The drive cable according to any one of the claims 1 to 11, **characterised in that** the cable body (26) has an axial recess at its periphery.

13. The drive cable according to claim 12, **characterised in that** the recess is formed by a bevel of the cable body (26), with the aid of which the drive cable can be justified in the peripheral direction by way of resting against a corresponding guide face of a cable guide.

14. A drive unit for a vehicle member being movable as against a vehicle structure, comprising a driving toothed wheel (24) and at least one drive cable (20A, 20B) according to any one of the claims 1 to 13.

15. The drive unit according to claim 14, **characterised in that** the drive cable (20A, 20B) and the driving toothed wheel (24) engage with each other via a contact line following a circular line.

16. The drive unit according to claim 15, **characterised in that** the contact line extends over at least 30° in relation to the periphery of the driving toothed wheel (24).

17. The drive unit according to claim 16, **characterised in that** the driving toothed wheel (24) engages with two drive cables (20A, 20B) according to any one of the claims 1 to 11 and **in that** the two drive cables (20A, 20B), in relation to the axis of the driving toothed wheel (24), are offset one with respect to the other.

18. The drive unit according to claim 17, **characterised in that** the two drive cables (20A, 20B) and the driving toothed wheel (24) in each instance engage with each other via a wrap angle of approximately 180°.

## Patentansprüche

1. Antriebskabel zur Betätigung eines gegenüber einem Fahrzeugaufbau beweglichen Fahrzeugelements (10), umfassend einen Kabelkörper (26) aus Kunststoff, der eine sich in axialer Richtung erstreckende Verzahnung (28) zum Eingriff mit einem Antriebszahnrad (24) aufweist und den eine sich in axialer Richtung erstreckende Armierung durchgreift, wobei die Verzahnung (28) gebildet ist durch in axialer Richtung regelmäßig beabstandete, taschenartige Ausnehmungen (34), die in Kabellängsrichtung von Flanken von resultierenden, von dem Kabelkörper (26) gebildeten Zahnköpfen (36) und in Kabelquerrichtung beidseits jeweils von einer Taschenflanke (38) begrenzt sind und die jeweils bodenseitig von einem Zahnfuß (40) begrenzt sind, wobei die Armierung den Kabelkörper (26) unterhalb der Ausnehmungen (34) und der Zahnköpfe (36) durchgreift, wobei die Armierung eine sich in Kabelquerrichtung und Kabellängsrichtung erstreckende Armierungsebene (A) definiert, in der mindestens zwei durchgängige, sich in axialer Richtung erstreckende Armierungsstränge (30A, 30B, 30C) nebeneinander angeordnet sind und/oder mindestens ein Armierungsstrang (30) mit einem flachen Querschnitt angeordnet ist, **dadurch gekennzeichnet, dass** der Kabelkörper (26) ein extrudiertes Polymerelement ist, welches einem kreisförmigen oder ovalen Querschnitt folgt, und dass obere Zahnstirnseiten (36) der Verzahnung (28) bezogen auf eine von dem Kabelkörper (26) im verzahnungsfreien Bereich definierte und im Verzahnungsbereich virtuell fortgesetzte Umfangsfläche in Richtung Kabelkörperachse zurückgesetzt sind, so dass die Verzahnung (28) vollständig innerhalb der von dem Kabelkörper (26) definierten Umfangsfläche liegt.

2. Antriebskabel nach Anspruch 1, **dadurch gekennzeichnet, dass** die mindestens zwei Armierungsstränge (30A, 30B, 30C) jeweils einen runden Querschnitt haben.

3. Antriebskabel nach Anspruch 1, **dadurch gekennzeichnet, dass** der mindestens eine Armierungsstrang (30) mit dem flachen Querschnitt eine lange Querschnittsachse hat, die sich in Kabelquerrichtung erstreckt, und eine kurze Querschnittsachse hat, die sich in Kabelhochrichtung erstreckt.

4. Antriebskabel nach Anspruch 3, **dadurch gekennzeichnet, dass** der Armierungsstrang (30) aus einem Metallband gebildet ist.

5. Antriebskabel nach einem der Ansprüche 1 bis 4, **dadurch gekennzeichnet, dass** der mindestens eine Armierungsstrang (30A, 30B, 30C) aus einem Draht, einem Drahtgeflecht, Kohlefasern und/oder Glasfasern gebildet ist.

6. Antriebskabel nach einem der Ansprüche 1 bis 5, **dadurch gekennzeichnet, dass** die Armierungsebene (A) parallel und beabstandet zu einer Längsmittelebene (L) des Kabelkörpers (26) angeordnet ist.

7. Antriebskabel nach einem der Ansprüche 1 bis 6, **dadurch gekennzeichnet, dass** die Ausnehmungen (34) jeweils bezogen auf die Umfangsrichtung des Kabelkörpers (26) einen Öffnungsquerschnitt haben, der weniger als 180° in Umfangsrichtung des Kabelkörpers (26) einnimmt.

8. Antriebskabel nach einem der Ansprüche 1 bis 7, **dadurch gekennzeichnet, dass** die Ausnehmungen (34) in Kabelquerrichtung jeweils beidseits einen Taschenseitenrand (42) haben und sich zwischen den beiden Taschenseitenrändern (42) einer Ausnehmung (34) ein Führungsabschnitt des Kabelkörpers (26) erstreckt.

9. Antriebskabel nach Anspruch 8, **dadurch gekennzeichnet, dass** der Führungsabschnitt mindestens drei in Umfangsrichtung voneinander beabstandete Führungsflächen aufweist.

10. Antriebskabel nach Anspruch 9, **dadurch gekennzeichnet, dass** die Führungsflächen axiale Mittellinien aufweisen, die jeweils in Umfangsrichtung etwa 120° zueinander versetzt sind.

11. Antriebskabel nach einem der Ansprüche 1 bis 10, **dadurch gekennzeichnet, dass** der Kabelkörper (26) im Bereich der Zahnköpfe (36) einen zumindest angenähert kreisförmigen Querschnitt hat.

12. Antriebskabel nach einem der Ansprüche 1 bis 11, **dadurch gekennzeichnet, dass** der Kabelkörper (26) an seinem Umfang eine axiale Ausnehmung hat.

13. Antriebskabel nach Anspruch 12, **dadurch gekennzeichnet, dass** die Ausnehmung von einer Abflachung des Kabelkörpers (26) gebildet ist, mittels der das Antriebskabel durch Anlage an einer korrespondierenden Führungsfläche einer Kabelführung in Umfangsrichtung ausrichtbar ist.

14. Antriebseinheit für ein gegenüber einem Fahrzeugaufbau bewegliches Fahrzeugelement, umfassend ein Antriebszahnrad (24) und mindestens ein Antriebskabel (20A, 20B) nach einem der Ansprüche 1 bis 13.

15. Antriebseinheit nach Anspruch 14, **dadurch gekennzeichnet, dass** das Antriebskabel (20A, 20B) und das Antriebszahnrad (24) über eine einer Kreislinie folgenden Kontaktlinie in Eingriff stehen.

16. Antriebseinheit nach Anspruch 15, **dadurch gekennzeichnet, dass** sich die Kontaktlinie bezogen auf den Umfang des Antriebszahnrads (24) über mindestens 30° erstreckt.

17. Antriebseinheit nach Anspruch 16, **dadurch gekennzeichnet, dass** das Antriebszahnrad (24) mit zwei Antriebskabeln (20A, 20B) nach einem der Ansprüche 1 bis 11 in Eingriff steht und die beiden Antriebskabel (20A, 20B) bezogen auf die Achse des Antriebszahnrads (24) zueinander versetzt sind.

18. Antriebseinheit nach Anspruch 17, **dadurch gekennzeichnet, dass** die beiden Antriebskabel (20A, 20B) und das Antriebszahnrad (24) jeweils über einen Umschlingungswinkel von etwa 180° in Eingriff stehen.

## Revendications

1. Câble d'entraînement pour actionner un élément de véhicule (10) déplaçable par rapport à la caisse d'un véhicule, comprenant un corps de câble (26) en matière plastique qui présente une denture (28) s'étendant dans la direction axiale pour venir en prise avec un pignon d'entraînement (24) et qui est pénétré par un renforcement s'étendant dans la direction axiale, dans lequel la denture (28) est formée par des échancrures (34) de type poche qui sont régulièrement espacées dans la direction axiale, et qui sont limitées, dans la direction longitudinale du câble, par des flancs de têtes de dents (36) résultantes formés par le corps de câble (26) et limitées, dans la direction transversale du câble, par des flancs de poche (38) de part et d'autre et qui sont chacune limitées par une base d'une dent (40) du côté de fond, ledit renforcement pénétrant le corps de câble (26) au-dessous desdites échancrures (34) et desdites têtes de dents, ledit renforcement définissant un plan de renforcement (A) s'étendant dans la direction transversale du câble et dans la direction longitudinale du câble, et dans lequel au moins deux faisceaux de renforcement (30A, 30B, 30C) constants qui s'étendent dans la direction axiale sont disposés côté à côté et/ou dans lequel au moins un faisceau de renforcement (30) ayant une section transversale plate est disposé, **caractérisé en ce que** le corps de câble (26) est un élément en polymère extrudé qui suit une section transversale circulaire ou ovale et **en ce que** des fronts supérieurs de dents (36) de la denture (28), par référence à une surface circonférentielle définie par le corps de câble (26) dans la région sans denture et continue de manière virtuelle dans la région de la denture, sont reculés dans la direction de l'axe du corps de câble de sorte que la denture (28) est située dans son intégralité dans la surface circonférentielle définie par le corps de câble (26).

2. Câble d'entraînement selon la revendication 1, **caractérisé en ce que** chacun des au moins deux faisceaux de renforcement (30A, 30B, 30C) a une section transversale ronde.

3. Câble d'entraînement selon la revendication 1, **caractérisé en ce que** l'au moins un faisceau de renforcement (30) ayant la section transversale plate a un axe de section transversale long qui s'étend dans la direction transversale du câble et un axe de section transversale court qui s'étend dans la direction verticale du câble.

4. Câble d'entraînement selon la revendication 3, **caractérisé en ce que** le faisceau de renforcement (30) est formé d'un ruban métallique.

5. Câble d'entraînement selon l'une quelconque des revendications 1 à 4, **caractérisé en ce que** l'au moins un faisceau de renforcement (30A, 30B, 30C) est formé d'un fil, d'un grillage métallique, de fibres de carbone et/ou de fibres de verre.

6. Câble d'entraînement selon l'une quelconque des revendications 1 à 5, **caractérisé en ce que** le plan de renforcement (A) est disposé de façon à être parallèle par rapport à et espacé d'un plan longitudinal médian (L) du corps de câble (26).

7. Câble d'entraînement selon l'une quelconque des revendications 1 à 6, **caractérisé en ce que** chacune des échancrures (34), en rapport avec la direction de la circonférence du corps de câble (26), a une section transversale d'ouverture qui remplit moins que 180° dans la direction de la circonférence du corps de câble (26).

8. Câble d'entraînement selon l'une quelconque des revendications 1 à 7, **caractérisé en ce que** les échancrures (34), dans la direction transversale du câble, ont une bordure latérale de poche (42) respectivement de part et d'autre et **en ce qu'**une partie de guidage du corps de câble (26) s'étend entre les deux bordures latérales de poche (42) d'une échancrure (34).

9. Câble d'entraînement selon la revendication 8, **caractérisé en ce que** la partie de guidage présente au moins trois surfaces de guidage qui sont espacées les unes des autres dans la direction de la circonférence.

10. Câble d'entraînement selon la revendication 9, **caractérisé en ce que** les surfaces de guidage présentent des médianes axiales qui sont décalées les unes par rapport aux autres d'environ 120° dans la direction de la circonférence chaque fois.

11. Câble d'entraînement selon l'une quelconque des revendications 1 à 10, **caractérisé en ce que** le corps de câble (26), dans la région des têtes de dents (36), a une section transversale au moins approximativement circulaire.

12. Câble d'entraînement selon l'une quelconque des revendications 1 à 11, **caractérisé en ce que** le corps de câble (26) a une échancrure axiale à sa circonférence.

13. Câble d'entraînement selon la revendication 12, **caractérisé en ce que** l'échancrure est formée par un méplat du corps de câble (26) moyennant lequel le câble d'entraînement est ajustable dans la direction de la circonférence en être reposé contre une surface de guidage correspondante d'un conduit de câble.

14. Unité d'entraînement pour un élément de véhicule (10) déplaçable par rapport à la caisse d'un véhicule, comprenant un pignon d'entraînement (24) et au moins un câble d'entraînement (20A, 20B) selon l'une quelconque des revendications 1 à 13.

15. Unité d'entraînement selon la revendication 14, **caractérisée en ce que** le câble d'entraînement (20A, 20B) et le pignon d'entraînement (24) s'engagent à travers une ligne de contact qui suit une ligne circulaire.

16. Unité d'entraînement selon la revendication 15, **caractérisée en ce que** la ligne de contact s'étend sur au moins 30° en rapport avec la circonférence du pignon d'entraînement (24).

17. Unité d'entraînement selon la revendication 16, **caractérisée en ce que** le pignon d'entraînement (24) s'engage avec deux câbles d'entraînement (20A, 20B) selon l'une quelconque des revendications 1 à 11 et **en ce que** les deux câbles d'entraînement (20A, 20B), en rapport avec l'axe du pignon d'entraînement (24), sont décalés l'un par rapport à l'autre.

18. Unité d'entraînement selon la revendication 17, **caractérisée en ce que** les deux câbles d'entraînement (20A, 20B) et le pignon d'entraînement (24) chaque fois s'engagent à travers un angle d'enroulement d'environ 180°.
